# EUROPEAN PATENT SPECIFICATION

(11) **EP 1 063 517 B1**
(45) Date of publication and mention of the grant of the patent: **19.10.2005**
(21) Application number: 00202061.8
(22) Date of filing: 13.06.2000
(51) Int. Cl.: G01N 19/02, G01N 33/44, G01M 17/02

(54) **Apparatus for measuring the interaction between surfaces and rubber specimens**
Apparat zur Messung der Wechselwirkung zwischen Oberflächen und Gummi-Proben
Appareil pour la mesure de l'interaction entre des surfaces et des échantillons de caoutchouc

(30) Priority: 26.06.1999 EP 99202074
(43) Date of publication of application: 27.12.2000
(73) Proprietor: PIRELLI PNEUMATICI Società per Azioni, 20126 Milano (IT)
(72) Inventor: Serra, Antonio, 16138 Genova (IT); Volpi, Alessandro, 20144 Milano (IT)
(74) Representative: Ferroni, Filippo

(56) References cited:
- GB-A- 2 104 010
- US-A- 3 788 137
- US-A- 4 038 863
- US-A- 5 481 907
- US-A- 5 689 058
- US-A- 5 767 402

## Description

The invention relates to those apparatuses which in the tyre industry are used to test the behaviour of the rubber compounds, in connection with their rolling on surfaces with different morphological characteristics.

The apparatuses considered in the present description essentially consist of a so-called "road drum", namely a motorised cylindrical drum with a diameter of the order of 70-100 cm, on which a roller of smaller dimensions (generally with a diameter not greater than 1/5th of the road drum) constituting the specimen and having a radially external portion that over a thickness of preferably not less than 2 mm, is made with the vulcanized compound to be examined.

Also the specimen is driven and causing it to roll about the road drum, it is possible to analyse the behaviour of the compound being examined according to different operating situations which can be simulated with the apparatus, for example with relative slipping and/or with set drift angles.

In this manner it may be studied the behaviour of a compound under conditions of pure rolling contact between road drum and specimen or when there is relative slipping between them or when the inclination of the specimen with respect to the road drum is such as to reproduce the conditions to which the compound of a tyre tread is subject during bends.

Furthermore, in some more complex machines, the tests may be performed by spraying water, dust and/or other elements in the zone where there is contact between the drum and specimen, thus fully simulating those situations which may occur in reality.

The present invention is based on the Applicant's realisation that, precisely in such a context, the apparatuses known hitherto are not satisfactory.

Indeed, it must be taken into account that the roller which forms the specimen to be tested is usually mounted on the end of a spindle rotating about an axis parallel to that of the road drum.

This spindle is operated in a manner known per se, at the opposite side with respect to the specimen; however, in order to operate it in an environment which is exposed to water or the other elements mentioned above, some precautions are required: the latter include the use of sealed bearings.

These bearings, however, produce an inevitable friction which is opposite to the rotation of the spindle, thereby altering significantly the measurements performed; this is the case in particular of the evaluation of the torques acting with respect to the axis of rotation of the spindle.
US Patent No. 5,481,907 and UK Patent Application No. 2 104 010 disclose testing apparatuses for tires wherein an idle tire to be tested, rolls over the surface of a road drum: these apparatuses do not provide information about the behaviour of the rubber compound of the tire.

The object of the present invention is therefore that of providing an apparatus for testing rubber-compound specimens of tyres, having structural and operational characteristics such as to overcome the drawbacks mentioned.

According to a first aspect, the invention relates to an apparatus for testing tyre compounds, comprising a road drum and a specimen rotating about respective parallel axes and in rolling contact with each other, driving means for rotation of the road drum and the specimen, characterized in that these means comprise a specimen driving group in which there is a spindle driven by a motor, wherein the spindle is rotatably housed in a casing and the motor is fixed in a cradle seat integral with the casing so as to form a rigid body therewith, this body being supported in an idle manner with respect to the axis of rotation of the specimen.

Further characterising features of such an apparatus are set out in the claims which will follow.

The invention will be understood more clearly in the light of the description which is provided below, relating to a preferred but not limiting embodiment illustrated in the accompanying drawings, wherein:
- Fig. 1 shows a side view, with a removal part, of an apparatus according to the invention;
- Fig. 2 shows a plan view of the apparatus of Fig. 1;
- Fig. 3 shows a view sectioned along the line III-III in Fig. 2;
- Fig. 4 shows a detail of the apparatus according to the preceding figures.

With reference to these drawings, numeral 1 indicates the whole apparatus according to the invention.

Said apparatus comprises a supporting structure 2 formed by a series of uprights and cross-pieces which support a road drum 3 with the associated driving group 4 active about an axis of rotation X, and a specimen 5 driven by a group 6 active with respect to the axis of rotation Y.

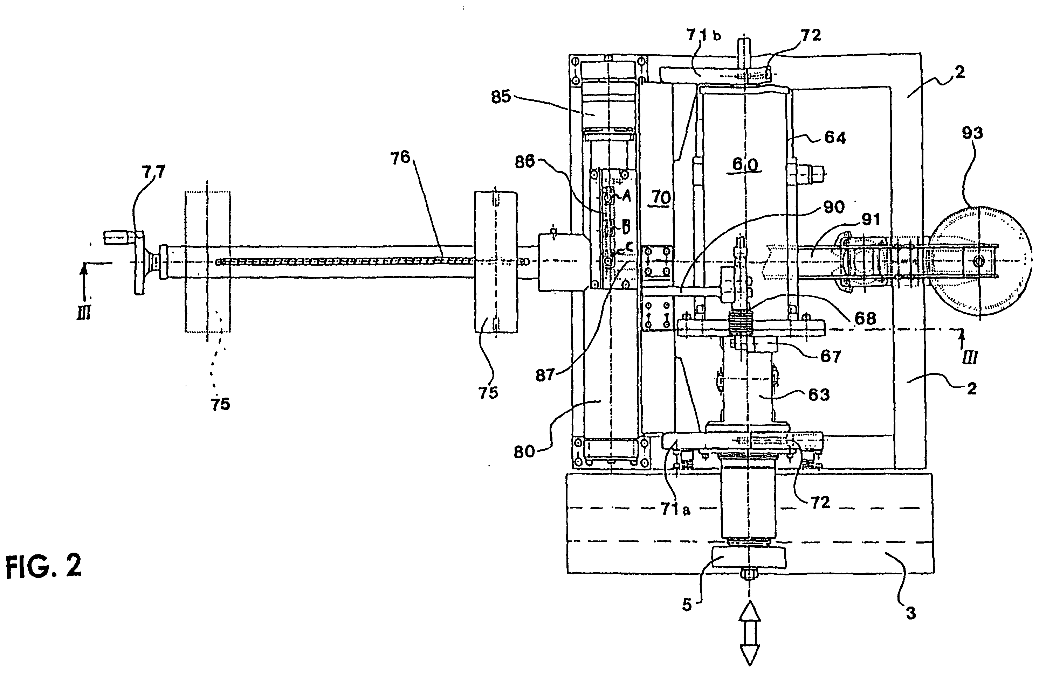

In accordance with a preferred embodiment, the external surface of the road drum 3 is divided up into circumferential bands (in this case three, the paths thereof are indicated by broken lines in Fig. 2) which have different degrees of roughness for the reasons that will emerge more clearly below.

The driving group 4 of the road drum 3 comprises an electric motor 40 of the brushless type, a reduction gear 41 and a braking device 42, which are all aligned along the axis X.

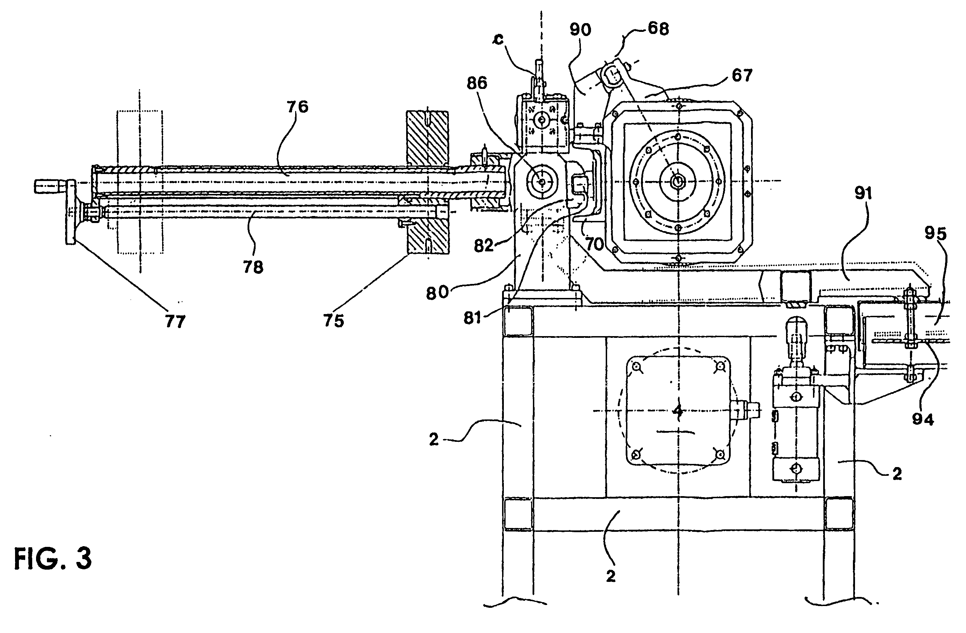

The driving group 6 of the specimen 5 is shown in detail in Figures 2, 3 and 4.

This group also comprises an electric motor 60 of the brushless type which is connected at the output by means of a joint 61 to a spindle 62, at the end thereof the specimen 5 is mounted.

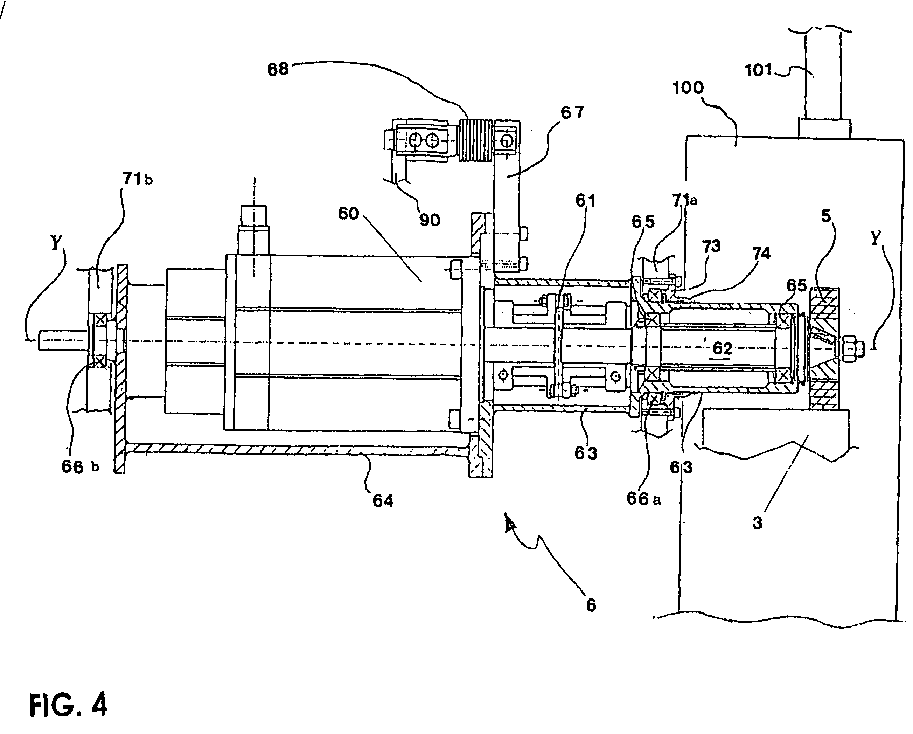

As can be seen from Figure 4, the joint 61 and the spindle 62 are housed inside a closed cylindrical casing 63 which, at its end opposite to that where the specimen 5 is located, is joined to a cradle seat 64 where the electric motor 60 is located, forming a single rigid body therewith.

The motor 60 is fixed to the inner walls of the cradle-type seat which, being open at the top, facilitates ventilation thereof; the spindle 62 on which the specimen 5 is mounted is however supported inside casing 63 so as to rotate freely about axis Y, by means of two bearings 65.

The rigid body formed both by the casing 63 and the cradle seat 64 is free to rotate about the axis Y owing to two low-friction bearings 66a, 66b, one of which is arranged at the furthest end from the specimen 5 and the other coaxially with one of the bearings 65 which support the spindle 62 inside the casing 63.

The cradle seat 64 also has, mounted on it, an arm 67 radially protruding over a predefined length and bearing, on its free end, a load cell 68 in the form of a strain gauge intended to detect the forces which act with respect to the axis Y.

Basically, since the length of the arm 67 is known, the forces measured by the cell following the small rotations of the cradle 64 (and the casing 63) caused by the motor 60 fixed on it, may be easily converted into a torque value by multiplying it for the known length of the arm 67.

Of course, this will be true for rotations of a magnitude (of the order of 0.001 radians) such that the non-linearity of the displacements at the end of the arm 67 on which the cell 68 is mounted, does not affect the correct operation of the latter.

It must also be pointed out that, in accordance with a preferred embodiment, the load cell 68 is of the prestressed type so as to eliminate imprecision in the measurements caused by any play between the cell itself and the support arm.

The driving group of the specimen 5 described above is supported by the structure 2 in a balanced manner owing to an assembly system which is described below.

The body formed by the casing 63 and the cradle seat 64 is mounted on a frame which comprises a longitudinal member 70 extending parallel to the axis Y and two plates 71a, 71b, which are transverse to the longitudinal member and are fixed to the end thereof: the bearings 66a, 66b supporting the abovementioned body are respectively mounted in these plates.

For mounting of the bearing 66a in the front plate 71a, namely that associated with the casing 63 where the spindle 62 is housed, a bush 73 is provided, being fixed on the front of the said casing by means of screws (see Fig. 4).

In order to protect this bush against water, dust and the other agents used during the tests performed with the apparatus 1, a seal 74 is provided in this example. Said seal consists of a sleeve which is made of rubber or other equivalent material and is fitted around the casing 63 and the part of the bush 73 adjacent thereto.

The weight of the operating group 6 and the associated support frame is balanced by a counterweight 75, the position thereof along a graduated rod 76 is varied manually by means of a handwheel 77 associated with an actuating screw 78.

More specifically, the longitudinal member 70 together with the plates 71 which support the driving group 6 are supported by a bridge 80 of the supporting structure 2 of the apparatus.

For this purpose the longitudinal member 70 is provided longitudinally with a tenon guide 81 slidably engaged with two mortise clamps 82 which are fixed to the bridge 80.

The latter also has, mounted on it, a motor 85 with an associated reduction gear for actuation of a screw 86, with which a cursor 87 rigidly connected to the longitudinal member 70 is associated (see Fig. 2); three proximity switches for stopping the cursor in corresponding positions indicated by A, B and C in the drawings are located above the screw 86.

On the opposite side, the cursor 87 is integral with the graduated rod 76 on which the counterweight 75 moves.

As can be seen from the drawings, a bracket 90 is also bolted onto the longitudinal member 70 and serves as an element for connecting the load sensor 68 to the frame which supports the operating group 6 of the specimen.

The apparatus in this example is provided with a vibration damping device comprising a lever 91 which is fixed at one end to the bridge 80 and which has, mounted on its opposite end, a viscous damping device 93 consisting of a disk 94 movable inside a cylindrical chamber 95.

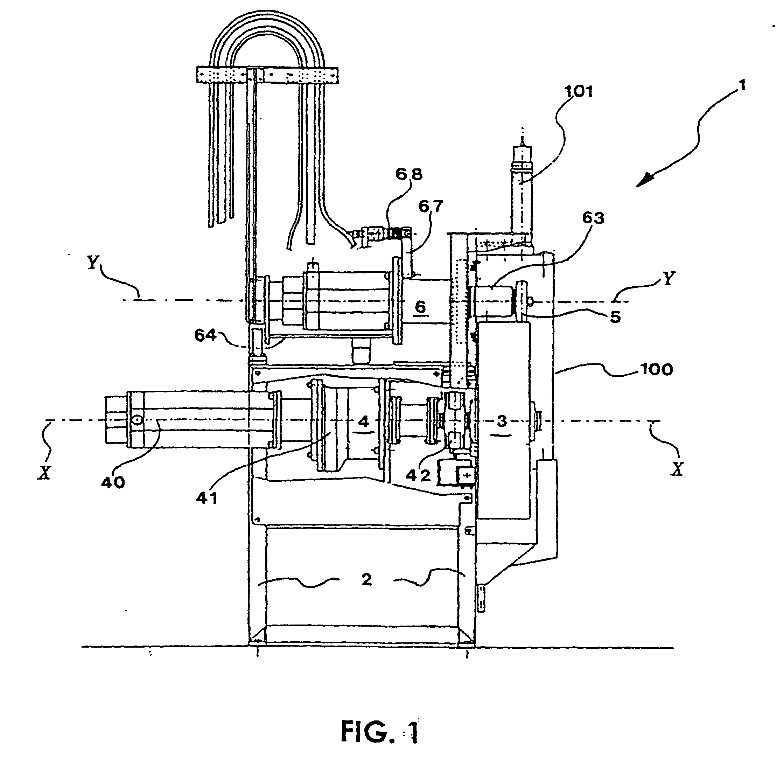

As can be seen from Figure 1, the road drum 3 and the specimen 5 of the apparatus 1 are located inside a chamber 100 to which the various nozzles 101 for supplying water and other materials used during the tests are fitted (in Fig. 1 only one of said nozzles has been shown for the sake of simplicity).

By way of completion of the description provided above it must be added that, from a functional point of view, the two electric motors 40 and 60 are controlled so as to allow the possibility of setting the desired ratio between the speed of rotation of the road drum 3 and of the specimen 5, depending on the type of tests which are to be performed (pure rolling, positive or negative slipping, etc.).

More specifically, the aforementioned motors are operationally linked to each other; this is made possible by the fact of having used electric motors of the type which can be controlled electronically, such as in particular brushless motors.

Advantageously in this case the motor 40 of the road drum is the master motor, while the motor of the specimen 5 is the slave so that the respective speeds of rotation have a relative ratio selected depending on the type of control which has been set.

Preferably this ratio may vary from 0 to infinity: in other words, all the setting conditions ranging between a first limit situation (road drum rotating/specimen at a standstill) to the opposite limit situation (road drum at a standstill/specimen rotating) are possible.

Preferably, the road drum has only one direction of rotation, i.e. clockwise or anti-clockwise, while the specimen may rotate in both directions.

In combination with or as an alternative to the speed of rotation, it is also possible to link the position (i.e. the angle corresponding to the rotation performed) of the specimen motor to that of the road drum motor.

Preferably, the sensors used in the apparatus are absolute or incremental encoders.

Basically, therefore, the transmission ratio of the two spindles which actuate the road drum and the specimen will be determined by the setting of the two motors 40 and 60.

Obviously, for its operation, the apparatus 1 is provided with a central electronic control unit (Fig. 1 shows partially the wiring for connection to this unit) which performs the function of adjusting the operating parameters (voltage, current, etc.) of the motors so as to perform the desired test cycles.

In this connection it must be pointed out that with the apparatus according to the invention it is possible to perform complex test cycles such as, for example, those with automatic reversal of the slipping movement between specimen and road drum (from positive to negative and vice versa), those with periodic variation of the said slipping movement, or those with application of a predefined torque on the specimen and the like.

These important results are made possible owing to the use of motors which are operationally linked to each other and can be electronically controlled, as in the case of the brushless electric motors mentioned.

Operationally speaking, the apparatus described above is therefore programmed at the start of each test cycle so as to perform the various operating steps required.

The road drum 3 and the specimen 5 are then made to rotate by the respective groups 4 and 6 depending on the input signals processed by the electronic control means mentioned above.

In this way the various tests (rolling test, slipping test, test with application of the set torque, etc.) are performed and the experimental variables such as the force existing between the specimen and the road drum, the increase in the surface temperature of the rubber, the speed, and the like, are measured.

These tests may be performed in dry, wet and mixed conditions as well as with different surface roughness owing to the special configuration of the road drum, the external surface of which is divided up into different circumferential bands, and owing to the possibility of moving the specimen 5 tangentially with respect thereto.

In this connection it may be noted how operation of the motor 85 produces the displacement of the cursor 87 along the screw 86, into one of the predefined positions A, B and C; since the cursor is rigidly fixed to the longitudinal member 70, it moves integrally therewith together with the driving group 6 of the specimen 5. It should be noted how, during this operation, the movement of the longitudinal member is guided by the engagement between the tenon guide 81 thereof and the mortise clamps 82 arranged on the bridge 80.

Following displacement, the specimen moves forwards or backwards along the contact generatrix of the road drum, as indicated by the arrow in Fig. 2, thus interacting with the zones of varying roughness situated thereon.

From the description provided hitherto it is therefore possible to appreciate how the present invention achieves the object set out before.

This is to be attributed to the particular supporting system of the motor 60 and spindle 62, which are arranged inside the body formed by the cradle seat 64 together with the casing 63 thereby making it possible to avoid the sealed bearings associated with the specimen actuating spindle, which were the source of harmful friction in the prior art.

In this way, indeed, the spindle 62 is housed inside a closed casing and is therefore protected from the water which is sprayed toward the specimen zone; consequently, the bearings 65 on which the spindle is rotatably mounted in this casing may be of the conventional, i.e. the non-sealed type.

The bearing 66a which supports the casing 63 in the region of the front plate 71 a may, on the other hand, be protected by the bush 73 and by the sleeve 74 because the casing 63 does not rotate in the manner of the spindle 62, since it performs only minimum oscillations of the order of a few thousandths of a radian (detected by the load sensor 68).

The protection of this bearing is therefore facilitated by this fact.

In other words, in the apparatus according to this invention, the fact of having arranged the spindle 62 inside a closed housing allows to avoid moving external parts which could be exposed to water and to the other agents used during the tests: this eliminates therefore the need to have sealed bearings for the spindle and facilitates instead the application of systems for protecting the low-friction bearings which support the casing 63.

Obviously variations of the invention with respect to the example thereof described herein may be envisaged.

Firstly it must be pointed out that the parts which support the operating group 6 of the specimen 5 may be different from the frame formed by the longitudinal member 70 and the plates 71; the important thing, of course, is that this group may be displaced along the axis Y as described above and is free to rotate with respect to this axis.

Furthermore, the systems for operating the specimen and the road drum may be of the most varied kind with motors of various types, provided that they are able to offer the same features with regard to the possibility of performing adjustment necessary for the tests mentioned.

Similarly, the methods of supporting and moving the operating group 6 of the specimen, i.e. the frame formed by the longitudinal member 70 and the plates 71, as well as the mechanism with the motor 85, the screw 86 and the cursor 87, may be replaced by equivalent mechanical solutions which are within the task of a person skilled in the art.

These and other variations will however fall within the scope of the claims which follow.

## Claims

1. Apparatus for testing tyre compounds, comprising a road drum (3) and a specimen (5) rotating about respective parallel axes (X, Y) and being in rolling contact with each other, driving means (4, 6) for rotation of the road drum and the specimen, **characterized in that** said means comprise a specimen driving group (6) in which there is a spindle (62) driven by a motor (60), wherein the spindle is rotatably housed in a casing (63) and the motor is fixed in a cradle seat (64) integral with the casing so as to form a rigid body therewith, this body being supported in an idle manner with respect to the axis (Y) of rotation of the specimen.

2. Apparatus according to Claim 1, wherein the body formed by the casing (63) and by the cradle seat (64) is supported so as to be able to perform a translatory movement along the axis (Y) of rotation of the specimen (5).

3. Apparatus according to Claim 2, wherein the external surface of the road drum (3) is divided up into circumferential bands of varying roughness.

4. Apparatus according to Claim 1, wherein the body formed by the casing (63) and by the cradle seat (64) is supported on two bearings (66a, 66b), namely a front bearing (66a) arranged on the casing and a rear bearing (66b) arranged at the end of the cradle seat opposite to the specimen (5), where at least the front bearing is associated with a rubber protection sleeve (74).

5. Apparatus according to Claim 1, wherein an arm (67) projecting radially with respect to the axis (Y) of rotation of the specimen (5) is present on the body formed by the casing (63) and the cradle seat (64), said arm having a load cell (68) associated with it.

6. Apparatus according to Claim 1, wherein the operating group (6) of the specimen (5) is mounted on a frame which comprises a longitudinal member (70) parallel to the axis (Y) of rotation of the spindle (62) and two plates (71a, 71b) transverse thereto, which is slidable along this axis and is balanced by a counterweight (75).

7. Apparatus according to Claim 1, wherein the driving group (4) of the road drum (3) and the driving group (6) of the specimen (5) comprise a respective electric motor (40, 40) of the brushless type.

8. Apparatus according to Claim 7, wherein the motor (60) driving the specimen (5) is operationally dependent, in position and/or speed settings, on the motor driving the road drum (3).

9. Apparatus according to Claim 1, comprising a device (91, 93, 94, 95) for damping the vibrations of the driving group (6) of the specimen (5).

10. Apparatus according to Claim 9, wherein the vibration damping device comprises a lever (91) having one end connected to a bridge (80) of the supporting structure (2) of the apparatus on which the operating group (6) of the specimen (5) is mounted, and the other end being associated with a disk (94) oscillating in a viscous damping chamber (94).

## Patentansprüche

1. Vorrichtung zum Prüfen von Reifenmassen, welche eine Straßentrommel (3) und eine Probe (5), die sich um ihre jeweiligen parallelen Achsen (X, Y) drehen und in Abrollkontakt miteinander stehen, sowie Antriebseinrichtungen (4, 6) zum Drehen der Straßentrommel und der Probe aufweist, **dadurch gekennzeichnet, dass** die erwähnten Einrichtungen eine Probenantriebsgruppe (6) aufweisen, in der eine von einem Motor (60) angetriebene Spindel (62) vorhanden ist, die drehbar in einem Gehäuse (63) aufgenommen ist, wobei der Motor in einem Wiegesitz (64), der ein Stück mit dem Gehäuse und einen starren Körper mit ihm bildet, so festgelegt ist, dass dieser Körper bezüglich der Drehachse (Y) der Probe leerlaufmäßig gelagert ist.

2. Vorrichtung nach Anspruch 1, bei welcher der von dem Gehäuse (63) und von dem Wiegesitz (64) gebildete Körper so gelagert ist, dass er eine translatorische Bewegung längs der Drehachse (Y) der Probe (5) ausführen kann.

3. Vorrichtung nach Anspruch 2, bei welcher die Außenfläche der Straßentrommel (3) in Umfangsbänder mit variierender Rauhigkeit unterteilt ist.

4. Vorrichtung nach Anspruch 1, bei welcher der von dem Gehäuse (63) und dem Wiegesitz (64) gebildete Körper auf zwei Lagern (66a, 66b) gelagert ist, nämlich einem vorderen Lager (66a), das an dem Gehäuse angeordnet ist, und einem hinteren Lager (66b), da am Ende des Wiegesitzes gegenüber der Probe (5) angeordnet ist, wobei wenigstens dem vorderen Lager eine Gummischutzhülse (74) zugeordnet ist.

5. Vorrichtung nach Anspruch 1, bei welcher ein radial bezüglich der Drehachse (Y) der Probe (5) vorstehender Arm (67) an dem Körper vorhanden ist, der von dem Gehäuse (63) und dem Wiegesitz (64) gebildet wird, wobei dem Arm eine Kraftmessdose (68) zugeordnet ist.

6. Vorrichtung nach Anspruch 1, bei welcher die Funktionsgruppe (6) der Probe (5) an einem Rahmen angebracht ist, der ein zur Drehachse (Y) der Spindel (62) paralleles Längselement (70) mit zwei quer dazu verlaufenden Platten (71 a, 71 b) aufweist, längs dieser Achse verschiebbar und durch ein Gegengewicht (75) im Gleichgewicht gehalten ist.

7. Vorrichtung nach Anspruch 1, bei welcher die Antriebsgruppe (4) der Straßentrommel (3) und die Antriebsgruppe (6) der Probe (5) jeweils einen Elektromotor (40, 40) in bürstenloser Bauweise aufweist.

8. Vorrichtung nach Anspruch 7, bei welcher der die Probe (5) antreibende Motor (60) funktionsmäßig in Positions- und/oder Drehzahleinstellungen von dem die Straßentrommel (3) antreibenden Motor abhängig ist.

9. Vorrichtung nach Anspruch 1 mit einer Einrichtung (91, 93, 94, 95) zum Dämpfen der Vibrationen der Antriebsgruppe (6) der Probe (5).

10. Vorrichtung nach Anspruch 9, bei welcher die Antriebsdämpfeinrichtung einen Hebel (91) aufweist, dessen eines Ende mit einer Brücke (80) des Tragaufbaus (2) der Vorrichtung verbunden ist, an der die Funktionsgruppe (6) der Probe (5) angebracht ist, und dessen anderem Ende eine Scheibe (94) zugeordnet ist, die in einer viskosen Dämpfungskammer (64) schwingt.

## Revendications

1. Appareil pour tester des composés de pneus, comprenant un tambour routier (3) et un échantillon (5) tournant autour d'axes parallèles respectifs (X, Y) et en contact de roulement l'un avec l'autre, des moyens d'entraînement (4, 6) pour la rotation du tambour routier et de l'échantillon, **caractérisé en ce que** lesdits moyens comprennent un groupe d'entraînement d'échantillon (6) dans lequel il y a une broche (62) entraînée par un moteur (60), la broche étant logée à rotation dans un carter (63) et le moteur étant fixé dans un siège de berceau (64) intégré au carter afin de former un corps rigide avec celui-ci, ce corps étant supporté de manière inactive par rapport à l'axe (Y) de rotation de l'échantillon.

2. Appareil selon la revendication 1, dans lequel le corps formé par le carter (63) et par le siège de berceau (64) est supporté de façon à être capable d'effectuer un mouvement de translation suivant l'axe (Y) de rotation de l'échantillon (5).

3. Appareil selon la revendication 2, dans lequel la surface extérieure du tambour routier (3) est divisée en bandes circonférentielles de rugosité variable.

4. Appareil selon la revendication 1, dans lequel le corps formé par le carter (63) et par le siège de berceau (64) est supporté par deux roulements (66a, 66b), à savoir un roulement avant (66a) placé sur le carter et un roulement arrière (66b) placé à l'extrémité du siège de berceau opposée à l'échantillon (5), où au moins le roulement avant est associé à un manchon de protection en caoutchouc (74).

5. Appareil selon la revendication 1, dans lequel un bras (67) faisant saillie radialement par rapport à l'axe (Y) de rotation de l'échantillon (5) est présent sur le corps formé par le carter (63) et le siège de berceau (64), ledit bras comportant une cellule dynamométrique (68) qui lui est associée.

6. Appareil selon la revendication 1, dans lequel le groupe d'actionnement (6) de l'échantillon (5) est monté sur un cadre qui comprend un élément longitudinal (70) parallèle à l'axe (Y) de rotation de la broche (62) et deux plaques (71a, 71b) en travers de celui-ci, qui peut coulisser le long de cet axe et est équilibré par un contrepoids (75).

7. Appareil selon la revendication 1, dans lequel le groupe d'entraînement (4) du tambour routier (3) et le groupe d'entraînement (6) de l'échantillon (5) comprennent un moteur électrique respectif (40, 40) du type sans balais.

8. Appareil selon la revendication 7, dans lequel le moteur (60) entraînant l'échantillon (5) dépend fonctionnellement, dans les réglages de position et/ou de vitesse, du moteur qui entraîne le tambour routier (3).

9. Appareil selon la revendication 1, comprenant un dispositif (91, 93, 94, 95) pour amortir les vibrations du groupe d'entraînement (6) de l'échantillon (5).

10. Appareil selon la revendication 9, dans lequel le dispositif d'amortissement des vibrations comprend un levier (91) ayant une extrémité connectée à un pont (80) de la structure de support (2) de l'appareil sur laquelle le groupe d'actionnement (6) de l'échantillon (5) est monté, et l'autre extrémité étant associée à un disque (94) qui oscille dans une chambre d'amortissement visqueuse (94).
